# EUROPÄISCHE PATENTSCHRIFT

(11) **EP 1 206 184 B1**
(45) Veröffentlichungstag und Bekanntmachung des Hinweises auf die Patenterteilung: **19.01.2005**
(21) Anmeldenummer: 00969251.8
(22) Anmeldetag: 25.08.2000
(51) Int. Cl.: A01N 31/04, A01N 37/40

(54) **PFLANZENSCHUTZ**
PLANT PROTECTION
PROTECTION PHYTOSANITAIRE

(30) Priorität: 25.08.1999 DE 19940283
(43) Veröffentlichungstag der Anmeldung: 22.05.2002
(73) Patentinhaber: Schür, Jörg, 41844 Wegberg-Dalheim (DE)
(72) Erfinder: Schür, Jörg, 41844 Wegberg-Dalheim (DE)
(74) Vertreter: Helbing, Jörg, Dr. Dipl.-Chem.
(86) Internationale Anmeldenummer: PCT/EP2000/008344
(87) Internationale Veröffentlichungsnummer: WO 2001/013727

(56) Entgegenhaltungen:
- WO-A-00/03612
- WO-A-00/27192
- WO-A-95/31100
- WO-A-96/29895
- WO-A-98/54971
- WO-A-98/58540
- CA-A- 2 012 288
- FR-A- 2 228 434
- US-A- 5 814 325
- DATABASE WPI Section Ch, Week 199251 Derwent Publications Ltd., London, GB; Class C03, AN 1992-420381 XP002157097 & JP 04 316506 A (NAKANO SUMESE KK), 6. November 1992 (1992-11-06)
- DATABASE WPI Section Ch, Week 198946 Derwent Publications Ltd., London, GB; Class C03, AN 1989-337764 XP002157098 & SE 8 900 902 A (THORSELL W), 13. Mai 1989 (1989-05-13)
- DATABASE WPI Section Ch, Derwent Publications Ltd., London, GB; Class C03, AN 1971-54313S XP002157099 & JP 46 028797 B (SHIOI K)
- DATABASE WPI Section Ch, Week 199216 Derwent Publications Ltd., London, GB; Class C05, AN 1992-127230 XP002157100 & JP 04 069308 A (DOI K), 4. März 1992 (1992-03-04)
- PATENT ABSTRACTS OF JAPAN vol. 1998, no. 14, 31. Dezember 1998 (1998-12-31) & JP 10 259103 A (DAINIPPON), 29. September 1998 (1998-09-29)

## Beschreibung

Die vorliegende Erfindung betrifft Verfahren zum Schützen von Pflanzen während der letzten Woche vor der Ernte vor mikrobiellem Befall, umfassend das Verteilen oder Auftragen einer antimikrobiellen Zusammensetzung auf der Oberfläche der Pflanzen.

Pflanzen sind während ihres Anbaus und besonders nach der Ernte empfindlich gegenüber Schimmel, Bakterien, Insekten und Insektenlarven die die Qualität der Pflanzen oder des geemteten Pflanzenmaterials beeinträchtigen bzw. vernichten oder unbrauchbar machen. Darüber hinaus ist, insbesondere bei Pflanzen, die als Nahrungsmittel oder Futtermittel verwendet werden, ein großes Problem, dass durch Schimmel und Bakterien Toxine auf die Pflanzen und geemteten Pflanzenmaterialien aufgebracht werden, deren Verzehr für Mensch und Tier bedenklich ist. Insekten und Insektenlarven können besonders nach der Ernte, nämlich während der Lagerung bzw. im Zuge der Verarbeitung die Pflanzen kontaminieren oder vernichten. Diese Probleme werden noch dadurch erschwert, dass Biozide und Insektizide grundsätzlich eine Woche vor der Ernte abgesetzt werden müssen, so dass ein wirksamer antimikrobieller und insektizider Schutz zum Zeitpunkt der Ernte im allgemeinen nicht mehr vorliegt.

Es ist bekannt, dass Teebaumöl und Oreganoextrakte, wenn sie auf Pflanzen appliziert werden, als Repellant wirken, d. h. sie weisen eine gewisse insektizide Eigenschaft auf. Aus der JP-A-62126931 ist darüber hinaus bekannt, dass Gemüse zur Sterilisation mit einer wäßrigen Lösung besprüht werden kann, die ein Flavonoid, einen Alkohol wie Ethanol, Propylenglycol oder Glycerin, eine organische Säure und/oder ein Calciumsalz enthält. Diese Mittel gewährten jedoch keinen hinreichenden Schutz der Pflanzen vor mikrobiellem und insektizidem Befall. Weiterhin sind in der WO 96/29895, WO 98/58540 und WO 00/03612 Prozeßhilfsmittel und Additive für Nahrungsmittel beschrieben, in denen spezielle antimikrobielle Zusammensetzungen eingesetzt werden, die als antimikrobielle Bestandteile mindestens zwei GRAS(Generally Recognized As Safe)-Aromastoffe enthalten.

Aus der JP 04316506A sind antimikrobielle Wirkstoffe entnehmbar, welche unter anderem als eine Komponente Persimonentannin und Blattextrakt aus Eukalyptus sowie als eine weitere Komponente Vanillin, Piperonal, Gerbsäure, 1,2-Propandiol, Ethanol und Essigsäure enthalten können. CA-A-2012288 offenbart die Verwendung einer Mischung unter anderem bestehend aus einem natürlich vorkommenden Phenol (wie Thymol, Eugenol und Carvacrol) sowie einem aromatischen Alkohol (wie Benzylalkohol und Zimtalkohol) als Desinfektionsmittel für die Pflanzenhygiene. Phenolische Zusammensetzungen mit fungiziden Eigenschaften, die unter anderem Zimtsäure, Anthocyane, Flavonole und Tannin-Derivate enthalten können sind aus FR-A-2228434 bekannt. Schließlich offenbart die WO 00/27192 Desinfektionsmittel zur Bekämpfung und Inaktivierung von phytopathogenen Erregern zur Anwendung an der Pflanze auf der Basis eines synergistisch wirksamen Gemisches, welches unter anderem aliphatische Carbonsäuren, aromatische Carbonsäuren sowie primäre und/oder sekundäre aliphatische, einwertige Alkohole der Kettenlänge C2-C8 enthalten kann; hierbei entfaltet die Kombination aus aliphatischen und aromatischen Carbonsäuren die synergistische Wirkung.

Die Aufgabe der vorliegenden Erfindung beruht darin, ein Verfahren bereitzustellen, das Pflanzen, während der letzten Woche vor der Ernte einen ausreichend antimikrobiellen Schutz verleiht. Überraschenderweise wurde nun gefunden, dass die aus der WO 96/29895 und WO 98/58540 bekannten Zusammensetzungen geeignete antimikrobielle Eigenschaften aufweisen, die sie für den vorliegenden Zweck geeignet scheinen lassen. Insbesondere wurde gefunden, dass unter diesen Zusammensetzungen diejenigen, die einen aromatische GRAS-Aroma-Alkohol, insbesondere die benzylalkoholhaltigen Zusammensetzungen und diejenigen, die sowohl einen lipophilen als auch einen hydrophilen GRAS-Aromastoff enthalten, eine besonders hohe antimikrobielle Aktivität aufweisen. Aufgrund der Tatsache, dass sie toxikologisch unbedenklich sind, können diese Zusammensetzungen während der letzten Woche vor der Ernte verwendet werden.

### Gegenstand der vorliegenden Anmeldung ist demgemäß

(1) ein Verfahren zum Schützen von Pflanzen während der letzten Woche vor der Ernte vor mikrobiellem Befall, umfassend das Verteilen oder Auftragen einer antimikrobiellen Zusammensetzung auf der Oberfläche der Pflanzen, wobei die antimikrobielle Zusammensetzung
   (ii) wenigstens einen lipophilen GRAS(Generally Recognized As Safe)-Aroma-Alkohol oder deren Derivate (aₗ) und
   (ii) wenigstens einen hydrophilen GRAS-Aromastoff enthält; und
(2) eine bevorzugte Ausführungsform des in (1) definierten Verfahrens, wobei die antimikrobielle Zusammensetzung ausschließlich aus GRAS-Aromastoffen besteht.

Der Begriff "Pflanzen" im Sinne der vorliegenden Erfindung ist dabei wie folgt zu verstehen: Während der Anzucht, dem Anbau bis hin zur Ernte spricht man von lebensfähigen Organismen, d. h. "Pflanzen".

Im folgenden werden die erfindungsgemäß einsetzbaren Stoffe im einzelnen näher beschrieben:

Die vorstehend in (1) und (2) genannten GRAS-Aromastoffe und GRAS-Aroma-Alkohole sind von der FDA-Behörde zur Verwendung in Nahrungsmitteln als gewerbesicher anerkannt (GRAS = Generally Recognized As Safe In Food). Bei den erwähnten GRAS-Aromastoffen handelt es sich um solche Verbindungen, die in FEMA/FDA GRAS Flavour Substances Lists GRAS 3-15 Nr. 2001-3815 (Stand 1997) genannt sind. In dieser Liste sind natürliche und naturidentische Aromastoffe aufgeführt, die von der amerikanischen Gesundheitsbehörde FDA zur Verwendung in Nahrungsmitteln zugelassen sind: FDA Regulation 21 CFR 172.515 für naturidentische Aromastoffe (Synthetic Flavoring Substances and Adjuvants) und FDA Regulation 21 CFR 182.20 für natürliche Aromastoffe (Natural Flavoring Substances and Adjuvants). Geeignete GRAS-Aromastoffe gemäß der vorliegenden Erfindung sind z. B. (a) GRAS-Aroma-Alkohole oder deren Derivate, (b) Polyphenolverbindungen, (c) GRAS-Aromasäuren oder deren Derivate, (d) Phenole oder deren Derivate, (e) Ester, (f) Terpene, (g) Acetale, (h) Aldehyde und (i) etherische Öle.

Im einzelnen können beispielsweise folgende GRAS-Aroma-Alkohole (a) zum Einsatz kommen:
Benzylalkohol, Acetoin (Acetylmethylcarbinol), Ethylalkohol (Ethanol), Propylalkohol (1-Propanol), iso-Propylalkohol (2-Propanol, Isopropanol), Propylenglykol, Glycerin, n-Butylalkohol (n-Propylcarbinol), iso-Butylalkohol (2-Methyl-1-propanol), Hexylalkohol (Hexanol), L-Menthol, Octylalkohol (n-Octanol), Zimtalkohol (3-Phenyl-2-propen-1-ol), α-Methylbenzylalkohol (1-Phenylethanol), Heptylalkohol (Heptanol), n-Amylalkohol (1-Pentanol), iso-Amylalkohol (3-Methyl-1-butanol), Anisalkohol (4-Methoxybenylalkohol, p-Anisalkohol), Citronellol, n-Decylalkohol (n-Decanol), Geraniol, β-γ-Hexenol (3-Hexenol), Laurylalkohol (Dodecanol), Linalool, Nerolidol, Nonadienol (2,6-Nonadien-1-ol), Nonylalkohol (Nonanol-1 ), Rhodinol, Terpineol, Bomeol, Clineol (Eucalyptol), Anisol, Cuminylalkohol (Cuminol), 10-Undecen-1-ol, 1-Hexadecanol. Als Derivate können sowohl natürliche oder naturidentische Derivate als auch synthetische Derivate eingesetzt werden. Geeignete Derivate sind z. B. die Ester, Ether und Carbonate der vorstehend genannten GRAS-Aroma-Alkohole. Besonders bevorzugte GRAS-Aroma-Alkohole sind Benzylalkohol, 1-Propanol, Glycerin, Propylenglycol, n-Butylalkohol, Citronellol, Hexanol, Linalool, Acetoin und deren Derivate.

Als Komponente (b) können die folgenden Polyphenole eingesetzt werden:
Brenzcatechin, Resorcin, Hydrochinon, Phloroglucin, Pyrogallol, Resveratrol, Usninsäure, Acylpolyphenole, Lignine, Anthocyane, Flavone, Catechine, Gallussäurederivate (z. B. Tannine, Gallotannin, Gerbsäuren, Gallus-Gerbsäuren), Carnosol, Camosolsäure (einschließlich deren Derivate wie (2,5-Dihydroxyphenyl)carboxyl- und (2,5-Dihydroxyphenyl)alkylencarboxylsubstitutionen, Salze, Ester, Amide), Kaffesäure und deren Ester und Amide, Flavonoide (z. B. Flavon, Flavonol, Isoflavon, Gossypetin, Myrecetin, Robinetin, Apigenin, Morin, Taxifolin, Eriodictyol, Naringin, Rutin, Hesperidin, Troxerutin, Chrysin, Tangeritin, Luteolin, Catechine, Quercetin, Fisetin, Kaempferol, Galangin, Rotenoide, Aurone, Flavonole, Diole), Extrakte aus z. B. Camellia Primula. Weiterhin können auch deren mögliche Derivate, z. B. Salze, Säuren, Ester, Oxide und Ether verwendet werden. Das besonders bevorzugte Polyphenol ist Tannin (eine GRAS-Verbindung).

Als Komponente (c) können beispielsweise folgende GRAS-Säuren zum Einsatz kommen:
Essigsäure, Aconitsäure, Adipinsäure, Ameisensäure, Apfelsäure (1-Hydroxybernsteinsäure), Capronsäure, Hydrozimtsäure (3-Phenyl-1-propionsäure), Pelargonsäure (Nonansäure), Milchsäure (2-Hydroxypropionsäure), Phenoxyessigsäure (Glykolsäurephenylether), Phenylessigsäure (α-Toluolsäure), Valeriansäure (Pentansäure), iso-Valeriansäure (3-Methylbutansäure), Zimtsäure (3-Phenyapropensäure), Citronensäure, Mandelsäure (Hydroxyphenylessigsäure), Weinsäure (2,3-Dihydroxybutandisäure; 2,3-Dihydroxybernsteinsäure), Fumarsäure, Tanninsäure und deren Derivate.

Geeignete Derivate der GRAS-Aromasäuren im Sinne der vorliegenden Erfindung sind Ester (z. B. C₁₋₆-Alkylester und Benzylester), Amide (einschließlich N-substituierte Amide) und Salze (Alkali-, Erdalkali- und Ammoniumsalze der vorstehend genannten Säuren zu verstehen. Ebenfalls umfassen Derivate im Sinne der vorliegenden Erfindung Modifikationen der Seitenketten-Hydroxyfunktionen (z. B. Acyl- und Alkylderivate) und Modifikationen der Doppelbindungen (z. B. die perhydrierten und hydroxylierten Derivate der genannten Säuren).

Als Komponente (d) können folgende Phenolverbindungen zum Einsatz kommen:
Thymol, Methyleugenol, Acetyleugenol, Safrol, Eugenol, Isoeugenol, Anethol, Phenol, Methylchavicol (Estragol; 3-4-Methoxyphenyl-1-propen), Carvacrol, α-Bisabolol, Fornesol, Anisol (Methoxybenzol) und Propenylguaethol (5-Prophenyl-2-ethoxaphenol) und deren Derivate. Derivate im Sinne der vorliegenden Erfindung sind Verbindungen, in denen die phenolische Hydroxylgruppe verestert oder verethert ist.

Als GRAS-Ester (Komponente (e)) kommen beispielsweise Allicin und die folgenden Acetate Iso-Amylacetat (3-Methyl-1-butylacetat), Benzylacetat, Benzylphenylacetat, n-Butylacetat, Cinnamylacetat (3-Phenylpropenylacetat), Citronellylacetat, Ethylacetat (Essigester), Eugenolacetat (Acetyleugenol), Geranylacetat, Hexylacetat (Hexanylethanoat), Hydrocinnamylacetat (3-Phenyl-propylacetet), Linalylacetat, Octylacetat, Phenylethylacetat, Terpinylacetat, Triacetin (Glyceryltriacetat), Kaliumacetat, Natriumacetat und Calciumacetat zum Einsatz. Weitere geeignete Ester sind die Esterderivate der vorstehend definierten Säuren (Komponente (b2)).

Als Terpene (Komponente (f)) kommen z. B. Campher, Limonen und β-Caryophyllen in Betracht.

Zu den verwendbaren Acetalen (Komponente (g)) zählen z. B. Acetal, Acetaldehyddibutylacetal, Acetaldehyddipropylacetal, Acetaldehydphenethylpropylacetal, Zimtaldehydethylenglycolacetal, Decanaldimethylacetal, Heptanaldimethylacetal, Heptanalglycerylacetal und Benzaldehydpropylenglykolacetal.

Als Aldehyde (Komponente (h)) sind z. B. Acetylaldehyd, Anisaldehyd, Benzaldehyd, iso-Butylaldehyd (Methyl-1-propanal), Citral, Citronellal, n-Caprinaldehyd (n-Decanal), Ethylvanillin, Furfurol, Heliotropin (Piperonal), Heptylaldehyd (Heptanal), Hexylaldehyd (Hexanal), 2-Hexenal (β-Propylacrolein), Hydrozimtaldehyd (3-Phenyl-1-propanal), Laurylaldehyd (Docdecanal), Nonylaldehyd (n-Nonanal), Octylaldehyd (n-Octanal), Phenylacetaldehyd (1-Oxo-2-phenylethan), Propionaldehyd (Propanal), Vanillin, Zimtaldehyd (3-Phenylpropenal), Perillaaldehyd und Cuminaldehyd verwendbar.

Erfindungsgemäß einsetzbar sind beispielsweise auch die im folgenden aufgeführten etherischen Öle und/oder die alkoholischen, glykolischen oder durch CO₂-Hochdruckverfahren erhaltenen Extrakte aus den genannten Pflanzen (Komponente (i)):
(i1) Öle bzw. Extrakte mit hohem Anteil an Alkoholen: Melisse, Koriander, Kardamon, Eukalyptus;
(i2) Öle bzw. Extrakte mit hohem Anteil an Aldehyden: Eukalyptus citriodora, Zimt, Zitrone, Lemongras, Melisse, Citronella, Limette, Orange;
(i3) Öle bzw. Extrakte mit hohem Anteil an Phenolen: Oreganum, Thymian, Rosmarin, Orange, Nelke, Fenchel, Campher, Mandarine, Anis, Cascarille, Estragon und Piment;
(i4) Öle bzw. Extrakte mit hohem Anteil an Acetaten: Lavendel;
(i5) Öle bzw. Extrakte mit hohem Anteil an Estern: Senf, Zwiebel, Knoblauch;
(i6) Öle bzw. Extrakte mit hohem Anteil an Terpenen: Pfeffer, Pomeranze, Kümmel, Dill, Zitrone, Pfefferminz, Muskatnuß.

Nachfolgend wird die antimikrobielle Zusammensetzung des vorstehend definierten Verfahrens (1) näher erläutert. In dieser Zusammensetzung sind die lipophilen GRAS-Aromastoffe vorzugsweise ausgewählt aus (aₗ) lipophilen GRAS-Aroma-Alkoholen oder deren Derivate, (b) Polyphenolverbindungen, (cₗ) lipophilen GRAS-Aromasäuren oder deren Derivate, (d) Phenolen oder deren Derivate, (eₗ) lipophilen Estern, (f) Terpenen, (g) Acetalen, (hₗ) lipophilen Aldehyden und (i) etherischen Ölen. Die antimikrobielle Zusammensetzung enthält vorzugsweise zwei der genannten GRAS-Aromastoffe.

Geeignete lipophile GRAS-Aroma-Alkohole (aₗ) aus den vorstehend definierten Alkoholen (a) sind dabei insbesondere:
aromatischen GRAS-Aroma-Alkoholen, umfassend Benzylalkohol, 2-Phenylethanol, 1-Phenylethanol, Zimtalkohol, Hydrozimtalkohol, 1-Phenyl-1-Propanol und Anisalkohol und aliphatischen GRAS-Aroma-Alkoholen, umfassend n-Butylalkohol, iso-Butylalkohol, Hexylalkohol, L-Menthol, Octylalkohol, Heptylalkohol, n-Amylalkohol, iso-Amylalkohol, Anisalkohol, Citronellol, n-Decylalkohol, Geraniol, β-γ-Hexanol, Laurylalkohol, Linalool, Nerolidol, Nonadienol, Nonylalkohol, Rhodinol, Terpineol, Borneol, Clineol, Anisol, Cuminylalkohol, 10-Undecen-1-ol und 1-Hexadecanol und deren Derivate. Hierbei sind die aromatischen GRAS-Aroma-Alkohole und insbesondere Benzylalkohol bevorzugt.

Im Sinne der vorliegenden Erfindung ist der hydrophile GRAS-Aromastoff ein hydrophiler, alkoholischer GRAS-Aromastoff (aₕ) oder ein hydrophiler, nichtalkoholischer GRAS-Aromastoff ist, wobei der hydrophile, alkoholische GRAS-Aromastoff (aₕ) vorzugsweise ein einwertiger oder mehrwertiger Alkohol mit 2 bis 10, besonders bevorzugt mit 2 bis 7 C-Atomen ist, der insbesondere ausgewählt ist aus Acetoin, Ethylalkohol, Propylalkohol, iso-Propylalkohol, Propylenglykol und Glycerin und der hydrophile, nichtalkoholische GRAS-Aromastoff eine hydrophile organische GRAS-Aromasäure (Cₕ) mit 1 bis 15 C-Atomen oder ein physiologisches Salz derselben, ein hydrophiles Acetat (eₕ) oder ein hydrophiler Aldehyd (hₕ) ist. Bevorzugte hydrophile organische Säuren (cₕ) sind dabei solche, die 2 bis 10 C-Atome aufweisen und insbesondere Essigsäure, Aconitsäure, Ameisensäure, Apfelsäure, Milchsäure, Phenylessigsäure, Citronensäure, Mandelsäure, Weinsäure, Fumarsäure, Tanninsäure, Hydrozimtsäure und deren physiologischen Salze. Das hydrophile Acetat (eₕ) ist vorzugsweise Allicin, Triacetin, Kaliumacetat, Natriumacetat und Calciumacetat. Der hydrophile Aldehyd (hₕ) ist vorzugsweise aus Furfurol, Propionaldehyd und Vanillin.

Die lipophile Polyverbindung (b), Phenole oder deren Derivate (d), Terpene (f), Acetale (g) und etherischen Öle (i) in der Zusammensetzung des Verfahrens (1) sind dabei bevorzugt die vorstehend definierten Verbindungen (b), (d), (f), (g) und (i). Die lipophilen GRAS-Aromasäuren oder deren Derivate (cₗ), lipophilen Ester (eₗ) und lipophilen Aldehyde (hₗ) umfassen alle spezifisch genannten Säuren, Ester und Aldehyde mit Ausnahme der vorstehend spezifisch genannten Verbindungen (Cₕ), (eₕ) und (hₕ).

In bevorzugter Ausführungsform des Verfahrens (1) enthält die antimikrobielle Zusammensetzung entweder
(i) zwei lipophile GRAS-Aroma-Alkohole (aₗ), jedoch kein Benzylalkohol und keine Polyphenolverbindungen (b) oder
(ii) Benzylalkohol und/oder eine Polyphenolverbindung (b), jedoch keine weiteren GRAS-Aroma-Alkohole.

Hierbei ist besonders bevorzugt, wenn die antimikrobielle Zusammensetzung ausschließlich nichtalkoholische, hydrophile GRAS-Aromastoffe, insbesondere ausschließlich eine hydrophile GRAS-Aromasäure (Cₕ) enthält und wenn die antimikrobielle Zusammensetzung 0,01 bis 99 Gew.-%, vorzugsweise 0,1 bis 90 Gew.-% Benzylalkohol oder Polyphenolverbindungen (b) und 0,01 bis 50 Gew.-%, vorzugsweise 0,1 bis 30 Gew.-% hydrophile, nicht-alkoholische GRAS-Aromastoffe enthält.

In einer weiteren bevorzugten Ausführungsform des Verfahrens (1) enthält die antimikrobielle Zusammensetzung
(A) einen oder mehrere GRAS-Aroma-Alkohole (a) oder deren Derivate und
(B) einen oder mehrere Aromastoffe, ausgewählt aus Polyphenolverbindungen (b) und lipophile GRAS-Aromasäuren oder deren Derivate (c).

Bevorzugt ist dabei, wenn die Zusammensetzung 0,1 bis 99 Gew.-%, vorzugsweise 0,5 bis 99 Gew.-%, Komponente (a), 0 bis 25 Gew.-%, vorzugsweise 0,01 bis 10 Gew.-%, Komponente (b) und 0 bis 70 Gew.-%, vorzugsweise 0,01 bis 30 Gew.-%, Komponente (c) enthält.

Daneben kann die antimikrobielle Zusammensetzung weitere GRAS-Aromastoffe, ausgewählt aus (d) Phenolen oder deren Derivate, (eₗ) lipophilen Estern, (f) Terpenen, (g) Acetalen, (hₗ) lipophilen Aldehyden und (i) etherischen Ölen enthalten.

Weiterhin ist bevorzugt, wenn die Komponente (A) der antimikrobiellen Zusammensetzung Benzylalkohol als notwendigen Bestandteil (a1) und gegebenenfalls einen oder mehrere weitere lipophile GRAS-Aroma-Alkohole oder deren Derivate (aₗ) enthält. Vorzugsweise enthält diese antimikrobielle Zusammensetzung
0,1 bis 99 Gew.-%, vorzugsweise 0,1 bis 75 Gew.-% Benzylalkohol;
0 bis 99,8 Gew.-%, vorzugsweise 0,01 bis 99 Gew.-% Komponente (aₗ); und
0 bis 25 Gew.-%, vorzugsweise 0,01 bis 10 Gew.-% Komponente (b).
0 bis 70 Gew.-%, vorzugsweise 0,01 bis 30 Gew.-% Komponente (c).

Die hierbei eingesetzte Zusammensetzung kann weitere lipophile GRAS-Aromastoffe (d) - (i), wie vorstehend definiert, enthalten, vorzugsweise 0,001 bis 25 Gew.-%, besonders bevorzugt 0,01 bis 9 Gew.-%, der weiteren GRAS-Aromastoffe (d) - (i). Diese weiteren lipophilen GRAS-Aromastoffe sind besonders bevorzugt Phenole (d) und/oder etherische Öle (i).

In einer weiteren besonders bevorzugten Ausführungsform des Verfahrens (1) besteht die Komponente (A) der antimikrobiellen Zusammensetzung aus zwei lipophilen GRAS-Aroma-Alkoholen und die Komponente (B) enthält wenigstens eine Polyphenolverbindung (b). Hierbei ist die Polyphenolverbindung (b) bevorzugt Tannin, wobei eine Zusammensetzung, die 20 - 98 Gew.-% Benzylalkohol und 0,01 - 10 Gew.-% Tannin enthält, besonders bevorzugt ist.

Besonders bevorzugt in dem erfindungsgemäßen Verfahren ist die Verwendung von Systemen, die ausschließlich aus GRAS-Aromastoffen bestehen, insbesondere dann wenn die behandelten Pflanzen später als Nahrungsmittel, Getränke oder Genußmittel verzehrt werden oder anderweitig mit dem menschlichen Körper in Verbindung kommen, da hierdurch eine Kontamination der Pflanzen mit Nicht-GRAS-Verbindungen unterbunden wird. Weiterhin sollte darauf geachtete werden, dass die antimikrobielle Zusammensetzung frei von Ethanol und Isopropanol ist bzw. frei von bedenklichen Dosierungen von Ethanol und Isopropanol ist, da diese Stoffe sowohl von den Pflanzen absorbiert werden können, als auch von den Personen, die diese Pflanzen weiter verarbeiten, eingeatmet werden können. Darüber hinaus kann bei der Verwendung dieser Verbindungen Explosionsgefahr bestehen.

Das erfindungsgemäße Verfahren eignet sich für die Behandlung von Pflanzen während der letzten Woche vor der Ernte der Pflanzen. Die antimikrobielle Behandlung kann dabei durch Applikation auf die Oberfläche der Pflanzen (z. B. durch Sprühen, Tauchen, Vernebeln etc.) erfolgen. Die antimikrobielle Zusammensetzung kann dabei sowohl unverdünnt, als auch verdünnt in wässrigen Lösungsmittelsystemen, organischen Lösungsmittelsystemen und/oder Ölsuspensionen mit den Pflanzen in Verbindung gebracht werden.

Es konnte gezeigt werden, dass bei der Applikation auf Pflanzenoberflächen Konzentrationen von antimikrobieller Zusammensetzung im Bereich von 0,001 bis 100 mg/g Pflanze, vorzugsweise von 0,1 bis 10 mg/g Pflanze einen ausreichenden antimikrobiellen Schutz gewährleisten. Aus ökonomischen Gründen ergibt sich selbstverständlich, dass eine möglichst geringe Konzentration der antimikrobiellen Zusammensetzung eingesetzt wird.

Insbesondere eignet sich das erfindungsgemäße Verfahren zur Behandlung von z. B. Baumwolle, Getreide, Reis, Mais, Kartoffeln, Tabak, Kaffee, Kakao, Tee, Gemüse, Obst, Saatgut der genannten Pflanzen, Nüsse, Gewürzen, Kräutern, Zierpflanzen, Zucht- und Schnittblumen sowie zur Pflanzenkultivierung.

Insbesondere werden durch das erfindungsgemäße Verfahren die in der folgenden Liste aufgeführten Mikroorganismen, Verderbniserreger, Mykotoxinbildner und Parasiten signifikant verringert, wenn nicht sogar vollständig unterdrückt.

| Schimmelpilze | Kultur/Pflanze (z. B.) |
|---|---|
| Mehltauarten | Getreide (Feldpilze) |
| Rostpilze | Getreide (Feldpilze) |
| Blattfleckenpilze | Getreide (Feldpilze) |
| Fusarium-Arten | Getreide (Feldlagerpilze) |
| Aspergillus-Arten | Getreide (Lagerpilze) |
| Penicillium-Arten | Getreide (Lagerpilze) |
| | |
| Rhizoctonia | Tabak, Raps |
| Peronaspora | Tabak |
| Phytophtora | Tabak |
| Botrytis cinerea | Tabak |
| Rhizoctonia solani | Reis |
| | |
| Aspergillus Ocraceus | Kaffee |
| Aspergillus Niger | Kaffee |
| Clavosporium Fusarium | Kaffee |
| Penicillium | Kaffee |

| Parasiten | | Kultur/Pflanze (z. B.) |
|---|---|---|
| Lepidopteren | | Tomaten; Baumwolle |
| Lepidopteren | (Chilo suppressalis) | Reis |
| | (Chaphalocrosis medinalis) | Reis |
| | (Ostrina nubilalis) | Mais |
| Myzus persicae | | Tabak |

| Viren | Kultur/Pflanze (z. B.) |
|---|---|
| Tomatenmosaikvirus | Tomaten |
| X-Virus | Kartoffeln |
| Y-Virus | Kartoffeln |
| Rice Stripe Virus | Reis |
| TYM-Virus | Raps |
| Rizomania | Zuckerrübe |
| BNYVV | Zuckerrübe |

Die erfindungsgemäßen Biozide (d.h. Bakterizide, Fungizide, Viruzide, Sporizide) können neben der antimikrobiellen Zusammensetzung noch weitere Verbindungen, wie die vorstehend genannten Verbindungen (i1) bis (i7) enthalten. Darüber hinaus können die erfindungsgemäßen Biozide auch in Form von Retardzusammensetzungen vorliegen. Solche Retardzusammensetzungen sind insbesondere bei der Verwendung in Nährböden bevorzugt, um somit eine möglichst lang anhaltende biozide Wirksamkeit zu gewährleisten. Geeignete Retardzusammensetzungen sind beispielsweise Mikrokapseln oder Coatings, in denen der Wirkstoff mit einem geeigneten Verkapselungs- oder Coatingmaterial, wie z.B. Cellulosederivaten verkapselt oder gecoated ist.

Die vorliegende Erfindung wird anhand der nachfolgenden Beispiele näher erläutert. Weitere neben der Zusammensetzung des nachfolgenden Beispiels geeignete antimikrobielle Zusammensetzungen sind in der WO 96/29859 und der WO 98/58540 genannt.

### Beispiele

Die nachfolgenden Kulturpflanzen werden mit einer antimikrobiellen Zusammensetzung besprüht, die die folgenden Bestandteile (in Gew.-%) enthält:
10,0 % Polyphenol (hier: Tannin)
18,2 % Benzylalkohol
60,0 % Propylenglykol
8,0 % Milchsäure
3,8 % etherisches Öl (hier: ein phenolhaltiges etherisches Öl)

Die Ergebnisse sind in den nachfolgenden Tabellen 1 bis 3 zusammengefasst.

**Tabelle 1:**

| Weizen | | | | |
|---|---|---|---|---|
| | 50%ige Lösung in | Sprühmittel | Schimmelpilze § 35 LMBG (S.A.) | Parasitenlarven (S.A.) |
| W-0 | | O-Probe unbehandelt | 5 x 10⁴/g | besiedelt 6 Monate nach Ernte |
| W-1 | Wasser | 0,001 mg/g | 7 x 10³/g | kein Wachstum |
| W-2 | Wasser | 0,01 mg/g | 1 x 10³/g | kein Wachstum |
| W-3 | Wasser | 0,1 mg/g | 6 x 10²/g | kein Wachstum |
| W-4 | Wasser | 1 mg/g | 7 x 10¹/g | kein Wachstum |
| W-5 | Wasser | 10 mg/g | 2 x 10¹/g | kein Wachstum |
| W-6 | Wasser | 100 mg/g | < 10/g | kein Wachstum |
| W-7 | Lösemittel* | 0,001 mg/g | 5 x 10³/g | kein Wachstum |
| W-8 | Lösemittel* | 0,01 mg/g | 4 x 10³/g | kein Wachstum |
| W-9 | Lösemittel* | 0,1 mg/g | 3 x 10²/g | kein Wachstum |
| W-10 | Lösemittel* | 1 mg/g | 6 x 10¹/g | kein Wachstum |
| W-11 | Lösemittel* | 10 mg/g | 3 x 10¹/g | kein Wachstum |
| W-12 | Lösemittel* | 100 mg/g | 1 x 10¹/g | kein Wachstum |

| | | | | |
|---|---|---|---|---|
| * hier Rapsöl | | | | |

**Tabelle 2:**

| Tabak | | | | |
|---|---|---|---|---|
| | 50%ige Lösung in | Sprühmittel | Schimmelpilze § 35 LMBG (S.A.) | Parasitenlarven (S.A.) |
| T-0 | | O-Probe unbehandelt | 6 x 10⁴/g | besiedelt 6 Monate nach Ernte |
| T-1 | Wasser | 0,001 mg/g | 5 x 10⁴/g | kein Wachstum |
| T-2 | Wasser | 0,01 mg/g | 1 x 10⁴/g | kein Wachstum |
| T-3 | Wasser | 0,1 mg/g | 8 x 10³/g | kein Wachstum |
| T-4 | Wasser | 1 mg/g | 4 x 10²/g | kein Wachstum |
| T-5 | Wasser | 10 mg/g | 6 x 10¹/g | kein Wachstum |
| T-6 | Wasser | 100 mg/g | < 10/g | kein Wachstum |
| T-7 | Lösemittel* | 0,001 mg/g | 6 x 10⁴/g | kein Wachstum |
| T-8 | Lösemittel* | 0,01 mg/g | 8 x 10³/g | kein Wachstum |
| T-9 | Lösemittel* | 0,1 mg/g | 2 x 10³/g | kein Wachstum |
| T-10 | Lösemittel* | 1 mg/g | 4 x 10²/g | kein Wachstum |
| T-11 | Lösemittel* | 10 mg/g | 6 x 10¹/g | kein Wachstum |
| T-12 | Lösemittel* | 100 mg/g | 4 x 10¹/g | kein Wachstum |

| | | | | |
|---|---|---|---|---|
| * hier Rapsöl | | | | |

**Tabelle 3:**

| Rohkaffee | | | | |
|---|---|---|---|---|
| | 50%ige Lösung in | Sprühmittel | Schimmelpilze § 35 LMBG (S.A.) | Parasitenlarven |
| K-0 | | O-Probe unbehandelt | 4 x 10⁴/g | besiedelt 6 Monate nach Ernte |
| K-1 | Wasser | 0,001 mg/g | 9 x 10³/g | kein Wachstum |
| K-2 | Wasser | 0,01 mg/g | 4 x 10³/g | kein Wachstum |
| K-3 | Wasser | 0,1 mg/g | 7 x 10³/g | kein Wachstum |
| K-4 | Wasser | 1 mg/g | 1 x 10³/g | kein Wachstum |
| K-5 | Wasser | 10 mg/g | 3 x 10²/g | kein Wachstum |
| K-6 | Wasser | 100 mg/g | 8 x 10¹/g | kein Wachstum |
| K-7 | Lösemittel* | 0,001 mg/g | 2 x 10⁴/g | kein Wachstum |
| K-8 | Lösemittel* | 0,01 mg/g | 3 x 10³/g | kein Wachstum |
| K-9 | Lösemittel* | 0,1 mg/g | 8 x 10²/g | kein Wachstum |
| K-10 | Lösemittel* | 1 mg/g | 4 x 10²/g | kein Wachstum |
| K-11 | Lösemittel* | 10 mg/g | 6 x 10¹/g | kein Wachstum |
| K-12 | Lösemittel* | 100 mg/g | < 10/g | kein Wachstum |

| | | | | |
|---|---|---|---|---|
| * hier Rapsöl | | | | |

## Patentansprüche

1. Verfahren zum Schützen von Pflanzen während der letzten Woche vor der Ernte vor mikrobiellem Befall, umfassend das Verteilen oder Auftragen einer antimikrobiellen Zusammensetzung auf der Oberfläche der Pflanzen, wobei die antimikrobielle Zusammensetzung
(i) wenigstens einen lipophilen GRAS(Generally Recognized As Safe)-Aroma-Alkohol oder deren Derivate (aₗ) und
(ii) wenigstens einen hydrophilen GRAS-Aromastoff
enthält.

2. Verfahren nach Anspruch 1, wobei
(i) die Zusammensetzung weitherhin lipophile GRAS-Aromastoffe, ausgewählt aus (b) Polyphenolverbindungen, (cₗ) lipophilen GRAS-Aromasäuren oder deren Derivate, (d) Phenolen oder deren Derivate, (eₗ) lipophilen Estern, (f) Terpenen, (g) Acetalen, (h,) lipophilen Aldehyden und (i) etherischen Ölen, enthält und/oder
(ii) die antimikrobielle Zusammensetzung wenigstens zwei lipophile GRAS-Aromastoffe, vorzugsweise zwei lipophile GRAS-Aroma-Alkohole (aₗ), enthält.

3. Verfahren nach Anspruch 1 oder 2, wobei die lipophilen GRAS-Aroma-Alkohole ausgewählt sind aus: aromatischen GRAS-Aroma-Alkoholen, umfassend Benzylalkohol, 2-Phenylethanol, 1-Phenylethanol, Zimtalkohol, Hydrozimtalkohol, 1-Phenyl-1-propanol und Anisalkohol und aliphatischen GRAS-Aroma-Alkoholen, umfassend n-Butylalkohol, iso-Butylalkohol, Hexylalkohol, L-Menthol, Octylalkohol, Heptylalkohol, n-Amylalkohol, iso-Amylalkohol, Anisalkohol, Citronellol, n-Decylalkohol, Geraniol, β-γ-Hexenol, Laurylalkohol, Linalool, Nerolidol, Nonadienol, Nonylalkohol, Rhodinol, Terpineol, Borneol, Clineol, Anisol, Cuminylalkohol, 10-Undecen-1-ol und 1-Hexadecanol und deren Derivate, wobei die aromatischen GRAS-Aroma-Alkohole, insbesondere Benzylalkohol, bevorzugt sind.

4. Verfahren nach einem oder mehreren der Ansprüche 1 bis 3, wobei
der hydrophile GRAS-Aromastoff ein hydrophiler, alkoholischer GRAS-Aromastoff (aₕ) oder ein hydrophiler, nichtalkoholischer GRAS-Aromastoff ist, wobei der hydrophile, alkoholische GRAS-Aromastoff (aₕ) vorzugsweise ein einwertiger oder mehrwertiger Alkohol mit 2 bis 10, besonders bevorzugt mit 2 bis 7 C-Atomen ist, der insbesondere ausgewählt ist aus Acetoin, Ethylalkohol, Propylalkohol, iso-Propylalkohol, Propylenglykol und Glycerin und
der hydrophile, nichtalkoholische GRAS-Aromastoff eine hydrophile organische GRAS-Aromasäure (Cₕ) mit 1 bis 15 C-Atomen oder ein physiologisches Salz derselben, ein hydrophiles Acetat (eₕ) oder ein hydrophiler Aldehyd (hₕ) ist, wobei vorzugsweise die hydrophile organische Säure (Cₕ) 2 bis 10 C-Atome aufweist und insbesondere ausgewählt ist aus Essigsäure, Aconitsäure, Ameisensäure, Apfelsäure, Milchsäure, Phenylessigsäure, Citronensäure, Mandelsäure, Weinsäure, Fumarsäure, Tanninsäure, Hydrozimtsäure und deren physiologischen Salze;
das hydrophile Acetat (eₕ) ausgewählt ist aus Allicin, Triacetin, Kaliumacetat, Natriumacetat und Calciumacetat; und/oder
der hydrophile Aldehyd (hₕ) ausgewählt ist aus Furfurol, Propionaldehyd und Vanillin.

5. Verfahren nach Anspruch 4, wobei die antimikrobielle Zusammensetzung weniger als 50 Gew.-%, vorzugsweise weniger als 30 Gew.-%, besonders bevorzugt weniger als 20 Gew.-% Benzylalkohol oder eines Gemisches von Benzylalkohol mit Ethanol und/oder Isopropanol enthält.

6. Verfahren nach Anspruch 4, wobei die antimikrobielle Zusammensetzung
(i) zwei lipophile GRAS-Aroma-Alkohole (aₗ), jedoch kein Benzylalkohol und keine Polyphenolverbindungen (b) enthält, oder
(ii) Benzylalkohol und/oder eine Polyphenolverbindung (b), jedoch keine weiteren GRAS-Aroma-Alkohole enthält.

7. Verfahren nach Anspruch 6, wobei die antimikrobielle Zusammensetzung ausschließlich nichtalkoholische, hydrophile GRAS-Aromastoffe, insbesondere ausschließlich eine hydrophile GRAS-Aromasäure (cₕ) enthält und insbesondere
0,01 bis 99 Gew.-%, vorzugsweise 0,1 bis 90 Gew.-% Benzylalkohol oder Polyphenolverbindungen (b) und
0,01 bis 50 Gew.-%, vorzugsweise 0,1 bis 30 Gew.-% hydrophile, nicht-alkoholische GRAS-Aromastoffe
enthält.

8. Verfahren nach Anspruch 1 oder 2, wobei die antimikrobielle Zusammensetzung
(A) einen oder mehrere GRAS-Aroma-Alkohole (a) oder deren Derivate und
(B) einen oder mehrere Aromastoffe, ausgewählt aus Polyphenolverbindungen (b) und lipophile GRAS-Aromasäuren oder deren Derivate (c)
enthält, wobei die antimikrobielle Zusammensetzung vorzugsweise
0,1 bis 99 Gew.-%, vorzugsweise 0,5 bis 99 Gew.-%. Komponente (a),
0 bis 25 Gew.-%, vorzugsweise 0,01 bis 10 Gew.-%, Komponente (b) und
0 bis 70 Gew.-%, vorzugsweise 0,01 bis 30 Gew.-%, Komponente (c)
enthält.

9. Verfahren nach Anspruch 8, wobei die antimikrobielle Zusammensetzung weitere GRAS-Aromastoffe, ausgewählt aus (d) Phenolen oder deren Derivate, (eₗ) lipophilen Estern, (f) Terpenen, (g) Acetalen, (hₗ) lipophilen Aldehyden und (i) etherischen Ölen enthält, wobei bevorzugt die Komponente (A) der antimikrobiellen Zusammensetzung Benzylalkohol als notwendigen Bestandteil (a1) und gegebenenfalls einen oder mehrere weitere lipophile GRAS-Aroma-Alkohole oder deren Derivate (aₗ) enthält.

10. Verfahren nach Anspruch 8 oder 9, wobei die Polyphenolverbindung (b) ausgewählt ist aus:
Brenzcatechin, Resorcin, Hydrochinon, Phloroglucin, Pyrogallol, Resveratrol, Usninsäure, Acylpolyphenolen, Ligninen, Anthocyane, Flavonen, Catechinen, Gallussäurederivaten, Kaffesäure, Flavonoiden, Derivaten der genannten Polyphenole und Extrakten aus Camellia Primula und
die lipophile GRAS-Säure (c) ausgewählt ist aus:
Adipinsäure, Capronsäure, Pelargonsäure, Phenoxyessigsäure, Valeriansäure, iso-Valeriansäure, Zimtsäure, Mandelsäure und deren Derivate.

11. Verfahren nach Anspruch 9 oder 10, wobei die antimikrobielle Zusammensetzung
0,1 bis 99 Gew.-%, vorzugsweise 0,1 bis 75 Gew.-% Benzylalkohol;
0 bis 99,8 Gew.-%, vorzugsweise 0,01 bis 99 Gew.-% Komponente (a,); und
0 bis 25 Gew.-%, vorzugsweise 0,01 bis 10 Gew.-% Komponente (b),
0 bis 70 Gew.-%, vorzugsweise 0,01 bis 30 Gew.-% Komponente (c)
enthält.

12. Verfahren nach Anspruch 11, wobei die antimikrobielle Zusammensetzung weitere lipophile GRAS-Aromastoffe (d) - (i) enthält, vorzugsweise 0,001 bis 25 Gew.-% und besonders bevorzugt 0,01 bis 9 Gew.-%, der weiteren GRAS-Aromastoffe (d) - (i), wobei die weiteren lipophilen GRAS-Aromastoffe insbesondere Phenole (d) und/oder etherische Öle (i) sind.

13. Verfahren nach einem oder mehreren der Ansprüche 9 bis 12, wobei die antimikrobielle Zusammensetzung ein oder zwei lipophile GRAS-Aroma-Alkohole (aₗ) und wenigstens eine Polyphenolverbindung (b) enthält, wobei die Polyphenolverbindung (b) bevorzugt Tannin ist und besonders bevorzugt die antimikrobielle Zusammensetzung 20 - 98 Gew.-% Benzylalkohol und 0,01 - 10 Gew.-% Tannin enthält.

14. Verfahren nach einem oder mehreren der Ansprüche 1 bis 13, wobei die antimikrobielle Zusammensetzung
(i) weiterhin ein oder mehrwertige Alkohole mit 2 bis 10 C-Atomen, Emulgatoren, Stabilisatoren, Antioxidantien, Konservierungsmittel, Lösemittel und/oder Trägerstoffe enthält, oder
(ii) ausschließlich aus GRAS-Aromastoffen besteht.

15. Verfahren nach einem oder mehreren der Ansprüche 1 bis 14, wobei das Verteilen oder Auftragen eine Applikation der antimikrobiellen Zusammensetzung auf die Oberfläche der Pflanzen umfasst und insbesondere durch Sprühen, Tauchen oder Vernebeln erfolgt.

## Claims

1. A method for protecting plants shortly during the last week before the harvest from microbial attack, comprising the distribution or application of an antimicrobial composition to the surface of the plants, said antimicrobial composition containing
(i) at least one lipophilic GRAS (generally recognized as safe) flavoring alcohol or its derivatives (aₗ); and
(ii) at least one hydrophilic GRAS flavoring agent.

2. The method according to claim 1, wherein
(i) said composition further contains lipophilic GRAS flavoring agents selected from (b) polyphenol compounds, (cₗ) lipophilic GRAS flavor acids or their derivatives, (d) phenols or their derivatives, (eₗ) lipophilic esters, (f) terpenes, (g) acetals, (hₗ) lipophilic aldehydes and (i) essential oils; and/or
(ii) said antimicrobial composition contains at least two lipophilic GRAS flavoring agents, preferably two lipophilic GRAS flavor alcohols (aₗ).

3. The method according to claim 1 or 2, wherein said lipophilic GRAS flavor alcohols are selected from: aromatic GRAS flavor alcohols, including benzyl alcohol, 2-phenylethanol, 1-phenylethanol, cinnamyl alcohol, hydrocinnamyl alcohol, 1-phenyl-1-propanol and anisalcohol, and aliphatic GRAS flavor alcohols, including n-butyl alcohol, iso-butyl alcohol, hexyl alcohol, L-menthol, octyl alcohol, heptyl alcohol, n-amyl alcohol, iso-amyl alcohol, anisalcohol, citronellol, n-decyl alcohol, geraniol, β,γ-hexenol, lauryl alcohol, linalool, nerolidol, nonadienol, nonyl alcohol, rhodinol, terpineol, borneol, clineol, anisole, cuminyl alcohol, 10-undecene-1-ol and 1-hexadecanol and their derivatives, said aromatic GRAS flavor alcohols, especially benzyl alcohol, being preferred.

4. The method according to one or more of claims 1 to 3, wherein said hydrophilic GRAS flavoring agent is a hydrophilic alcoholic GRAS flavoring agent (aₕ) or a hydrophilic non-alcoholic GRAS flavoring agent, wherein said hydrophilic alcoholic GRAS flavoring agent (aₕ) is preferably a monohydric or polyhydric alcohol having from 2 to 10, more preferably from 2 to 7, carbon atoms, especially one selected from acetoin, ethyl alcohol, propyl alcohol, isopropyl alcohol, propylene glycol and glycerol, and said hydrophilic non-alcoholic GRAS flavoring agent is a hydrophilic organic GRAS flavor acid (Cₕ) having from 1 to 15 carbon atoms or a physiological salt thereof, a hydrophilic acetate (eₕ) or a hydrophilic aldehyde (hₕ), wherein preferably said hydrophilic organic acid (Cₕ) has from 2 to 10 carbon atoms, especially being selected from acetic acid, aconitic acid, formic acid, malic acid, lactic acid, phenylacetic acid, citric acid, mandelic acid, tartaric acid, fumaric acid, tannic acid, hydrocinnamic acid and their physiological salts; said hydrophilic acetate (eₕ) is selected from allicin, triacetin, potassium acetate, sodium acetate and calcium acetate; and/or said hydrophilic aldehyde (hₕ) is selected from furfural, propionaldehyde and vanillin.

5. The method according to claim 4, wherein said antimicrobial composition contains less than 50% by weight, preferably less than 30% by weight, more preferably less than 20% by weight, of benzyl alcohol or of a mixture of benzyl alcohol with ethanol and/or isopropanol.

6. The method according to claim 4, wherein said antimicrobial composition contains
(i) two lipophilic GRAS flavor alcohols (aₗ), but no benzyl alcohol and no polyphenol compounds (b); or
(ii) benzyl alcohol and/or a polyphenol compound (b), but no further GRAS flavor alcohols.

7. The method according to claim 6, wherein said antimicrobial composition exclusively contains non-alcoholic hydrophilic GRAS flavoring agents, especially exclusively a hydrophilic GRAS flavor acid (cₕ) and, in particular, contains from 0.01 to 99% by weight, preferably from 0.1 to 90% by weight, of benzyl alcohol or polyphenol compounds (b) and from 0.01 to 50% by weight, preferably from 0.1 to 30% by weight, of hydrophilic non-alcoholic GRAS flavoring agents.

8. The method according to claim 1 or 2, wherein said antimicrobial composition contains
(A) one or more GRAS flavor alcohols (a) or their derivatives; and
(B) one or more flavoring agents selected from polyphenol compounds (b) and lipophilic GRAS flavor acids or their derivatives (c);
wherein said antimicrobial composition preferably contains
from 0.1 to 99% by weight, preferably from 0.5 to 99% by weight, of component (a),
from 0 to 25% by weight, preferably from 0.01 to 10% by weight, of component (b), and
from 0 to 70% by weight, preferably from 0.01 to 30% by weight, of component (c).

9. The method according to claim 8, wherein said antimicrobial composition contains further GRAS flavoring agents selected from (d) phenols or their derivatives, (eₗ) lipophilic esters, (f) terpenes, (g) acetals, (hₗ) lipophilic aldehydes and (i) essential oils, wherein preferably component (A) of said antimicrobial composition contains benzyl alcohol as a necessary component (a1) and optionally one or more further lipophilic GRAS flavor alcohols or their derivatives (aₗ).

10. The method according to claim 8 or 9, wherein said polyphenol compound (b) is selected from:
catechol, resorcinol, hydroquinone, phloroglucinol, pyrogallol, resveratrol, usnic acid, acylpolyphenols, lignins, anthocyans, flavones, catechols, gallic acid derivatives, caffeic acid, flavonoids, derivatives of the mentioned polyphenols, and extracts from Camellia, Primula; and
said lipophilic GRAS acid (c) is selected from:
adipic acid, capronic acid, pelargonic acid, phenoxyacetic acid, valeric acid, iso-valeric acid, cinnamic acid, mandelic acid and their derivatives.

11. The method according to claim 9 or 10, wherein said antimicrobial composition contains
from 0.1 to 99% by weight, preferably from 0.1 to 75% by weight, of benzyl alcohol;
from 0 to 99.8% by weight, preferably from 0.01 to 99% by weight, of component (aₗ); and
from 0 to 25% by weight, preferably from 0.01 to 10% by weight, of component (b);
from 0 to 70% by weight, preferably from 0.01 to 30% by weight, of component (c).

12. The method according to claim 11, wherein said antimicrobial composition contains further lipophilic GRAS flavoring agents (d) to (i), preferably from 0.001 to 25% by weight, more preferably from 0.01 to 9% by weight, of said further GRAS flavoring agents (d) to (i), wherein said further lipophilic GRAS flavoring agents are especially phenols (d) and/or essential oils (i).

13. The method according to one or more of claims 9 to 12, wherein said antimicrobial composition contains one or two lipophilic GRAS flavor alcohols (aₗ) and at least one polyphenol compound (b), wherein said polyphenol compound (b) is preferably tannin, and wherein more preferably said antimicrobial composition contains from 20 to 98% by weight of benzyl alcohol and from 0.01 to 10% by weight of tannin.

14. The method according to one or more of claims 1 to 13, wherein said antimicrobial composition
(i) further contains monohydric or polyhydric alcohols having from 2 to 10 carbon atoms, emulsifiers, stabilizers, antioxidants, preservatives , solvents and/or carriers; or
(ii) exclusively consists of GRAS flavoring agents.

15. The method according to one or more of claims 1 to 14, wherein said distribution or application comprises application of said antimicrobial composition to the surface of the plants, especially by spraying, immersion or nebulizing.

## Revendications

1. Procédé de protection phytosanitaire pendant la dernière semaine avant la récolte contre une infection microbienne, comprenant la distribution ou l'application d'une composition antimicrobienne à la surface des plantes, dans lequel la composition antimicrobienne contient
(i) au moins un alcool aromatique lipophile GRAS (généralement reconnu comme neutre) ou ses dérivés (aₗ) et
(ii) au moins une substance aromatique GRAS neutre hydrophile.

2. Procédé selon la revendication 1, dans lequel
(i) la composition contient en outre des substances aromatiques neutres lipophile, choisies dans le groupe comprenant (b) des composés de polyphénol, (cₗ) des acides aromatiques neutres lipophiles ou leurs dérivés, (d) des phénols ou leurs dérivés, (eₗ) des esters lipophiles, (f) des terpènes, (g) des acétals, (hₗ) des aldéhydes lipophiles et (i) des huiles d'éther, et/ou
(ii) la composition antimicrobienne contient au moins deux substances aromatiques neutres lipophiles, de préférence deux alcools aromatiques neutres lipophiles (aₗ).

3. Procédé selon la revendication 1 ou 2, dans lequel les alcools aromatiques neutres lipophiles sont choisis dans le groupe comprenant les alcools aromatiques neutres aromatiques, comprenant l'alcool benzylique, le 2-phényl éthanol, le 1-phényl éthanol, l'alcool cinnamique, l'alcool hydrocinnamique, le 1-phényl 1-propanol et l'alcool d'anis, et les alcools aromatiques neutres aliphatiques comprenant l'alcool n-butylique, l'alcool isobutylique, l'hexanol-1, le L-menthol, l'alcool octylique, l'heptanol-1, l'alcool n-amylique, l'alcool iso-amylique, l'alcool d'anis, le citronellol, l'alcool n-décylique, le géraniol, le β-γ-hexenol, l'alcool laurique, le linalol, le nérolidol, le nonadienol, l'alcool nonylique, le rhodinol, le terpinéol, le bornéol, le clinéol, l'anisole, l'alcool cuminique, le 10-undecen-1-ol et le 1-hexadécanol et leurs dérivés, les alcools aromatiques neutres aromatiques étant préférés, en particulier l'alcool benzylique.

4. Procédé selon l'une ou plusieurs des revendications 1 à 3, dans lequel
la substance aromatique neutre hydrophile est une substance aromatique neutre alcoolique, hydrophile (aₕ) ou bien une substance aromatique neutre non alcoolique, hydrophile, la substance aromatique neutre alcoolique, hydrophile (aₕ) étant de préférence un alcool monovalent ou polyvalent avec 2 à 10 atomes C, de préférence de 2 à 7, choisi en particulier dans le groupe comprenant l'acétoïne, l'alcool éthylique, l'alcool propylique, l'alcool isopropylique, le propylène glycol et la glycérine, et
la substance aromatique neutre non alcoolique, hydrophile est un acide aromatique neutre organique hydrophile (cₕ) avec 1 à 15 atomes C ou bien un sel physiologique de celui-ci, un acétate hydrophile (eₕ) ou bien un aldéhyde hydrophile (hₕ), l'acide organique hydrophile (cₕ) présentant de préférence 2 à 10 atomes C et étant choisi en particulier dans le groupe comprenant l'acide acétique, l'acide aconitique, l'acide formique, l'acide malique, l'acide lactique, l'acide phénylacétique, l'acide citrique, l'acide phénylglycolique, l'acide tartrique, l'acide fumarique, l'acide tannique, l'acide hydrocinnamique et leurs sels physiologiques ;
l'acétate hydrophile (cₕ) est choisi dans le groupe comprenant l'allicine, le triacétine, l'acétate de potassium, l'acétate de sodium et l'acétate de calcium; et/ou
l'aldéhyde hydrophile (hₕ) est choisi dans le groupe comprenant le furfurol, le propionaldéhyde et la vanilline.

5. Procédé selon la revendication 4, dans lequel la composition antimicrobienne contient moins de 50 % en poids, de préférence moins de 30 % en poids, plus particulièrement moins de 20 % en poids d'alcool benzylique ou d'un mélange d'alcool benzylique avec de l'éthanol et/ou de l'isopropanol.

6. Procédé selon la revendication 4, dans lequel la composition antimicrobienne contient
(i) deux alcools aromatiques neutres lipophiles (aₗ), mais ni alcool benzylique ni composé de polyphénol (b), ou
(ii) de l'alcool benzylique et/ou un composé de polyphénol (b), mais pas d'autres alcools aromatiques neutres.

7. Procédé selon la revendication 6, dans lequel la composition antimicrobienne contient exclusivement des substances aromatiques neutres hydrophiles, non alcooliques, en. particulier exclusivement un acide aromatique neutre hydrophile (cₕ) et en particulier
de 0,01 à 99 % en poids, de préférence de 0,1 à 90 % en poids d'alcool benzylique ou de composés de polyphénol (b) et
de 0,01 à 50 % en poids, de préférence de 0,1 à 30 % en poids de substances aromatiques neutres non alcooliques, hydrophiles.

8. Procédé selon la revendication 1 ou 2, dans lequel la composition antimicrobienne contient
(A) un ou plusieurs alcools aromatiques neutres (a) ou leurs dérivés et
(B) une ou plusieurs substances aromatiques, choisies dans le groupe comprenant des composés de polyphénol (b) et des acides aromatiques neutres lipophiles ou leurs dérivés (c),
ladite composition antimicrobienne contenant de préférence
de 0,1 à 99 % en poids, de préférence de 0,5 à 99 % en poids du composant (a),
de 0 à 25 % en poids, de préférence de 0,01 à 10 % en poids du composant (b) et
de 0 à 70 % en poids, de préférence de 0,01 à 30 % en poids du composant (c).

9. Procédé selon la revendication 8, dans lequel la composition antimicrobienne contient d'autres substances aromatiques neutres, choisies dans le groupe comprenant (d) des phénols ou leurs dérivés, (eₗ) des esters lipophiles, (f) des terpènes, (g) des acétals, (hₗ) des aldéhydes lipophiles et (i) des huiles d'éther, dans lequel de préférence le composant (A) de la composition antimicrobienne contient de l'alcool benzylique comme élément nécessaire (aₗ) et le cas échéant un ou plusieurs autres alcools aromatiques neutres lipophiles ou leurs dérivés (aₗ).

10. Procédé selon la revendication 8 ou 9, dans lequel lecomposé de polyphénol (b) est choisi dans le groupe comprenant :
la pyrocatéchine, la résorcine, l'hydroquinone, la phloroglucine, le pyrogallol, le resveratrol, l'acide usnique, les polyphénols acyles, les lignines, l'anthocyane, les flavones, les catéchines, les dérivés d'acide gallique, l'acide caféique, les flavonoïdes, les dérivés des polyphénols mentionnés et les extraits de camellia primula et
l'acide neutre lipophile (c) est choisi dans le groupe comprenant :
l'acide adipique, l'acide caprique, l'acide nonylique, l'acide phenoxyacétique, l'acide de valériane, l'acide d'iso-valériane, l'acide cinnamique, l'acide phénylglycolique et leurs dérivés.

11. Procédé selon la revendication 9 ou 10, dans lequel la composition antimicrobienne contient
de 0,1 à 99 % en poids, de préférence de 0,1 à 75 % en poids d'alcool benzylique;
de 0 à 99,8 % en poids, de préférence de 0,01 à 99 % en poids du composant (aₗ) ; et
de 0 à 25 % en poids, de préférence de 0,01 à 10 % en poids du composant (b),
de 0 à 70 % en poids, de préférence de 0,01 à 30 % en poids du composant (c).

12. Procédé selon la revendication 11, dans lequel la composition antimicrobienne contient d'autres substances aromatiques neutres lipophiles (d) - (i), de préférence de 0,001 à 25 % en poids et plus particulièrement de 0,01 à 9 % en poids des autres substances aromatiques neutres (d) - (i), les autres substances aromatiques neutres lipophiles étant notamment des phénols (d) et/ou des huiles d'éther (i).

13. Procédé selon l'une ou plusieurs des revendications 9 à 12, dans lequel la composition antimicrobienne contient un ou deux alcools aromatiques neutres lipophiles (aₗ) et au moins un composé de polyphénol (b), le composé de polyphénol (b) étant de préférence du tannin et la composition antimicrobienne contenantt plus particulièrement de 20 à 98 % en poids d'alcool benzylique et de 0,01 à 10 % en poids de tannin.

14. Procédé selon l'une ou plusieurs des revendications 1 à 13, dans lequel la composition antimicrobienne
(i) contient en outre des alcools monovalents ou polyvalents avec 2 à 10 atomes C, des émulsifiants, des stabilisateurs, des antioxydants, des conservateurs, des solvants et/ou des substances porteuses, ou bien (ii) est constitué exclusivement de substances aromatiques neutres.

15. Procédé selon l'une ou plusieurs des revendications 1 à 14, dans lequel la distribution ou l'application comprennent l'application de la composition antimicrobienne à la surface des plantes et en particulier par aspersion, immersion ou pulvérisation.
